# EUROPEAN PATENT SPECIFICATION

(11) **EP 3 802 069 B1**
(45) Date of publication and mention of the grant of the patent: **05.01.2022**
(21) Application number: 19733140.8
(22) Date of filing: 27.05.2019
(51) Int. Cl.: B29C 65/18, B29C 65/30, B29C 65/74, B29C 65/78, B65B 7/16, B65B 31/02, B65B 51/14, B65B 59/04

(54) **THERMO-SEALING MACHINE**
THERMOVERSIEGELUNGSMASCHINE
MACHINE DE THERMOSCELLAGE

(30) Priority: 29.05.2018 IT 201800005803
(43) Date of publication of application: 14.04.2021
(73) Proprietor: Caveco S.r.l., 25036 Palazzolo Sull'Oglio (BS) (IT)
(72) Inventor: VELLUTINI, Franco, 25038 Rovato (Brescia) (IT)
(74) Representative: Concone, Emanuele
(86) International application number: PCT/IB2019/054365
(87) International publication number: WO 2019/229622

(56) References cited:
- EP-A2- 0 362 799
- WO-A1-2014/139899

## Description

The present invention relates to the field of thermo-sealing food packages and trays, and in particular a thermo-sealing machine for food packages and a related kit.

Machines are currently known for thermo-sealing food packages, in which a tray is interposed between two facing moulds and a protective film is passed over it.

The two moulds are abutted against each other and define a sealed chamber from which the air can optionally be removed and replaced with a controlled atmosphere.

Specifically, depending on the food in the package, some machines allow the user to choose whether to keep the ambient air inside, to extract the air completely and package the product under vacuum, so that the film adheres to the product creating a "skin" effect, or to subsequently re-inject special gases into the package to create a controlled atmosphere aimed at protecting the original organoleptic and nutritional characteristics of the product along with its aesthetic appearance. Package sealing or thermo-sealing is carried out by heating the film by means of a resistance arranged along the edge of the tray so as to obtain a partial melt to be sealably adhered to the edge.

Simultaneously with or subsequently to these steps, the excess protective film can be cut off along the edge of the tray.

This type of machine is widely used for the packaging of fresh products often carried out by small commercial companies. In this context of use, in which the products and packages can be highly variable in size and shape, the small production volumes do not allow the adoption of multiple machines which are each specialized in the packaging of a different size and shape, and for this reason the possibility of quickly adapting a single machine to the shape and size of a package is considered as very important.

For this reason, machines have been developed featuring a modular design of the moulds, in which the individual moulds are interchangeable and configured to thermally seal packages with different sizes and shapes. In this type of machine, the individual moulds must be integrally connected to special seats arranged on the machine so that the latter can move them reciprocally according to the steps described above. These modular moulds must be electrically connected to a supply unit to power the resistance during the sealing and exchange electrical signals from sensors or probes intended to control the process. This electrical connection is typically made by connecting an electrical cable to the respective mould upon its positioning in the seat.

Moreover, in machines configured for vacuum or controlled atmosphere packaging, these moulds must be connected to a pneumatic air intake and/or gas injection mechanism. This pneumatic connection is typically made by connecting the mould to a sealed pipe connected to the respective pneumatic mechanism, and this is again carried out after the moulds have been positioned in their seat.

An example of a machine featuring an interchangeable upper mould with automatic electric and pneumatic connectors is described in EP 0362799, which however relates to a machine for sealing a flat metallic lid with a lower layer of heat bondable material onto a top flange extending around the periphery of an access opening in a container by means of an inductor ring, mounted within the upper mould, that causes the metallic lid to heat up and presses it against the flange of the container. Such a machine does not include a modular lower mould but only a radially moving nest that houses the container, and does not use a heat-sealable film.

Another machine more similar to the above-described type that uses a heat-sealable film is disclosed in WO 2014/1398999, and it includes an upper mould which supports film sealing and cutting modules in its lower part by way of hooking and releasing means so that said modules can be removed and replaced in a selective manner when defective. The machine also comprises a lower mould with seats for the support of the edges of the trays to be packaged and that by way of motion means is cyclically raised and lowered vertically with respect to the upper mould. Such a machine does not include a modular lower mould, and the replaceable modules only have an automatic electrical connector for the electrical supply to the sealing resistance provided thereon. Moreover, it does not include pneumatic means to remove and/or change the atmosphere within the package. The above-described prior art machines have some drawbacks. Disadvantageously, they don't have a complete a modular design of the moulds that is limited to the upper mould, causing deleterious production inefficiencies. Furthermore, the lower mould is not provided with a pneumatic connector, thus limiting their capacity of atmosphere removal/replacement in the package.

In this context, the technical task underlying the present invention is to provide a thermo-sealing machine for food packages and a related kit, which overcome at least some of the above-mentioned drawbacks of the prior art.

In particular, it is an object of the present invention to provide a thermo-sealing machine for food packages and a related kit, which can speed up the mould exchange operation, making it more efficient.

A further object of the present invention is to provide a thermo-sealing machine for food packages and a related kit, which can slow down the wear and tear of some components.

The specified technical task and objects are substantially achieved by means of a thermo-sealing machine for food packages and a related kit comprising the technical features set forth in one or more of the accompanying claims. The dependent claims correspond to different possible embodiments of the invention. Further features and advantages of the present invention will become more apparent from the indicative, and therefore non-limiting description of a preferred, but not exclusive, embodiment of a thermo-sealing machine for food packages and a related kit.

This description will be set forth hereinafter with reference to the accompanying drawings, which are provided for illustration purposes only, therefore not for limiting purposes, in which:
- Figure 1 is a front view of a thermo-sealing machine for food packages according to the present invention;

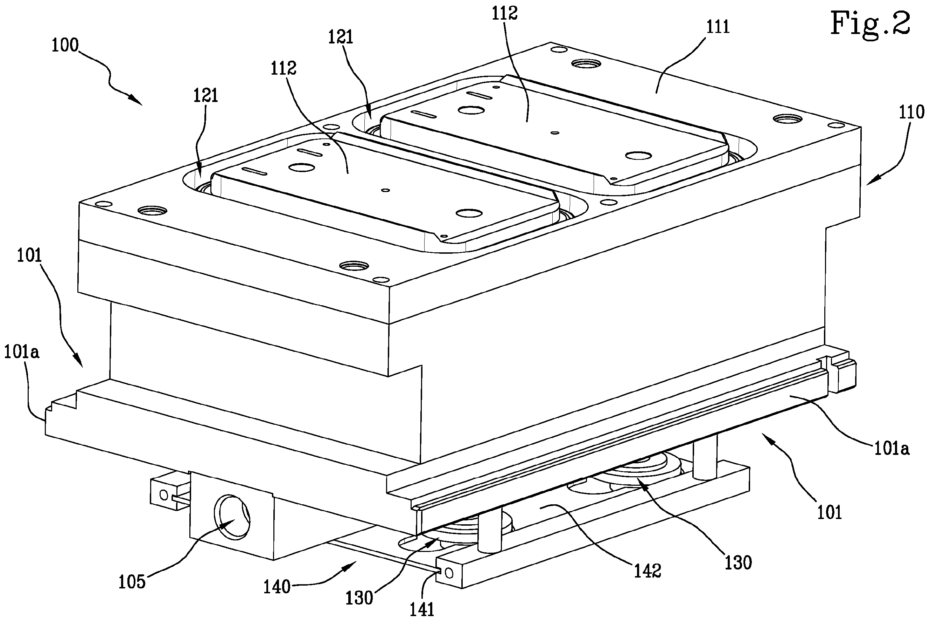

- Figure 2 is a perspective view of a mould in accordance with the present invention;

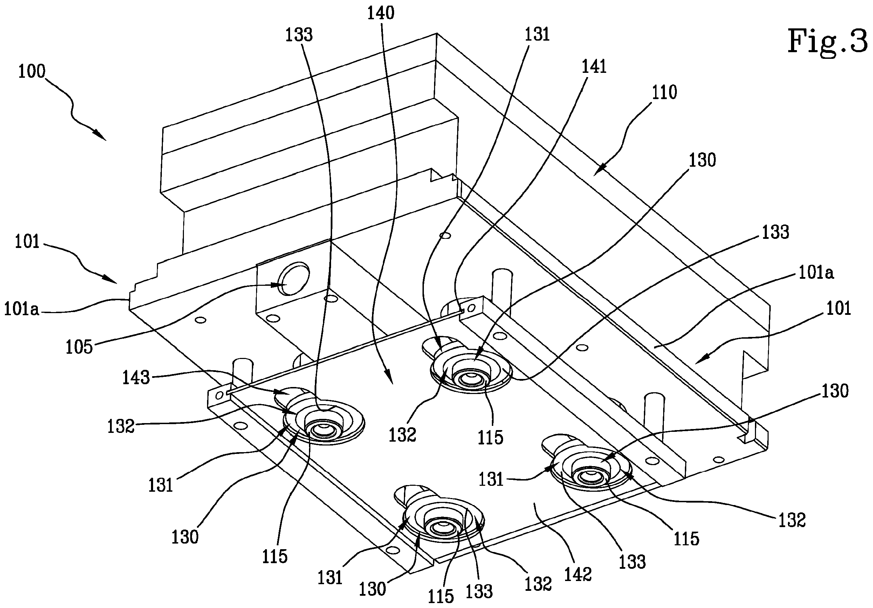

- Figure 3 is a perspective view of the mould in Figure 2 from a different angle;

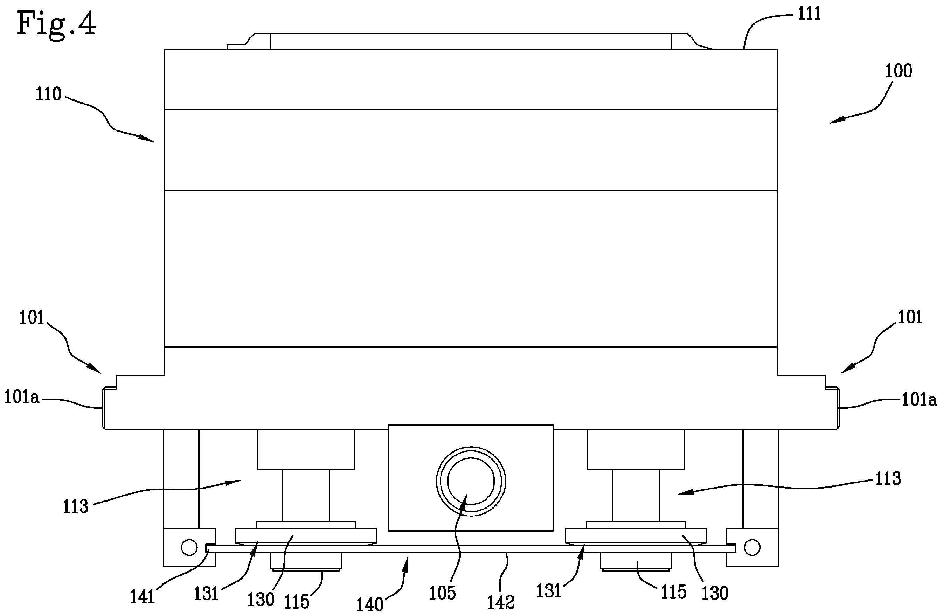

- Figure 4 is a rear view of the mould in Figure 2;

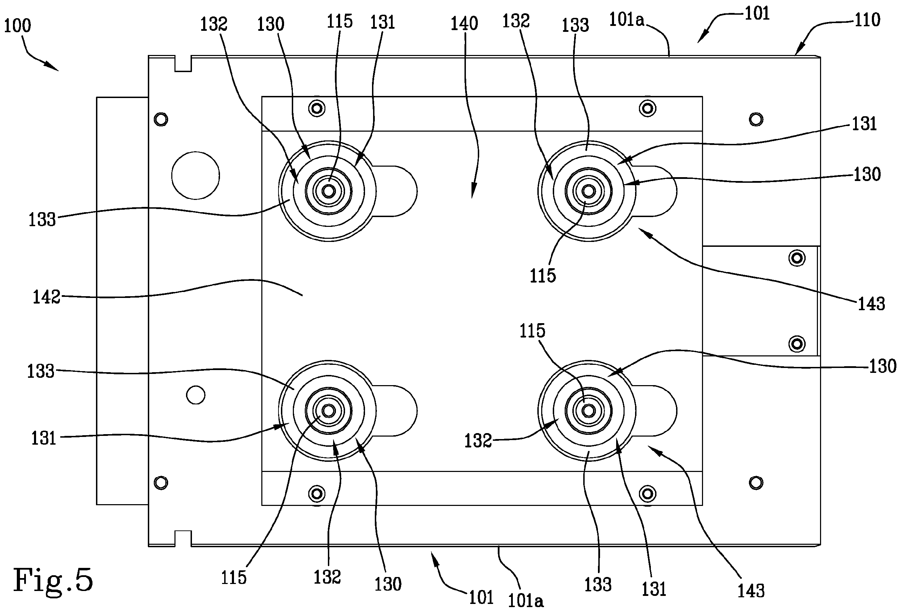

- Figure 5 is a bottom view of the mould in Figure 2;

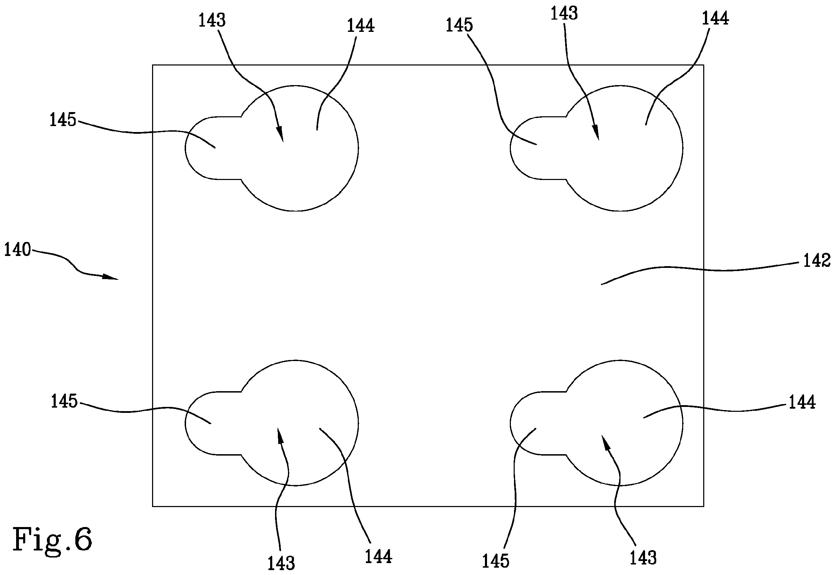

- Figure 6 shows an embodiment detail of the mould in Figure 2;

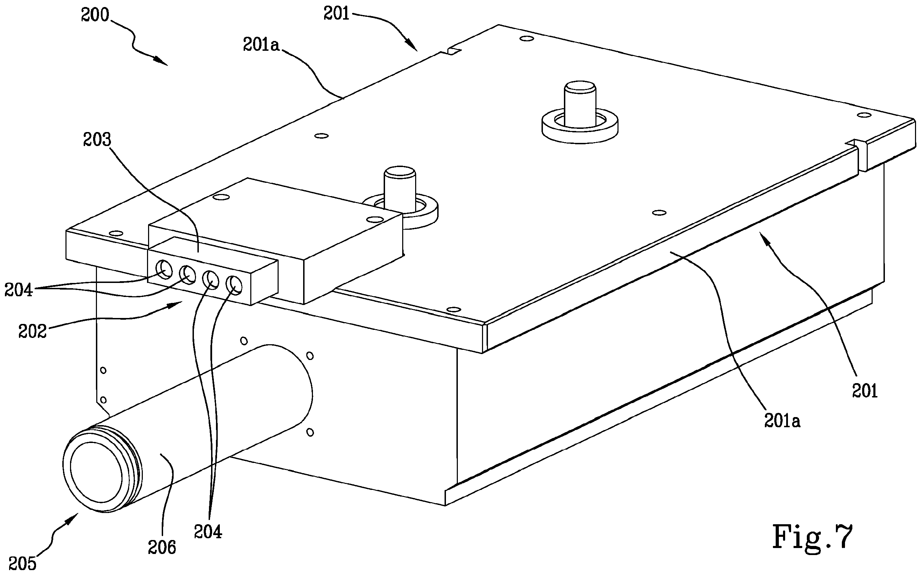

- Figure 7 is a perspective view of a different mould in accordance with the present invention;

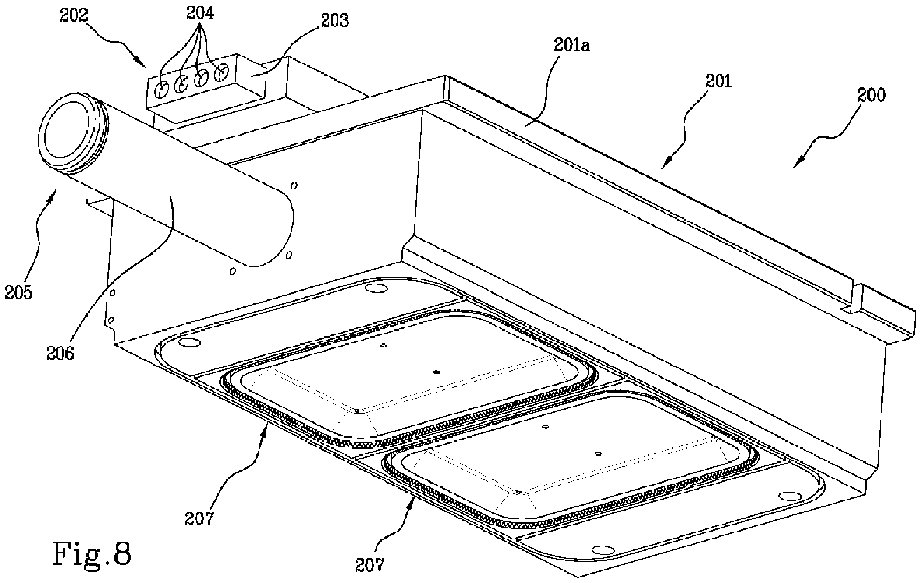

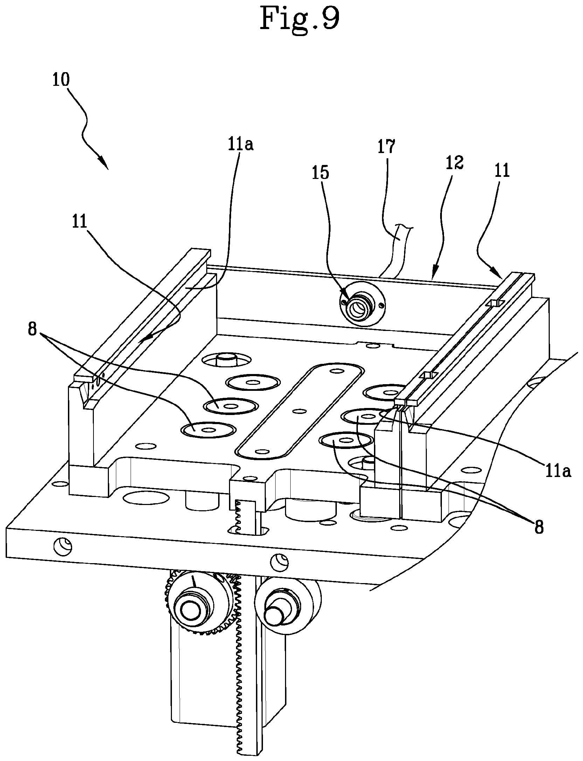

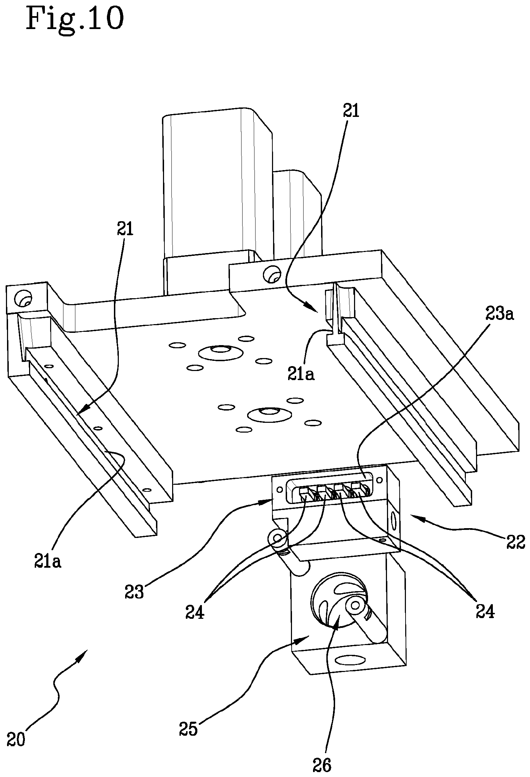

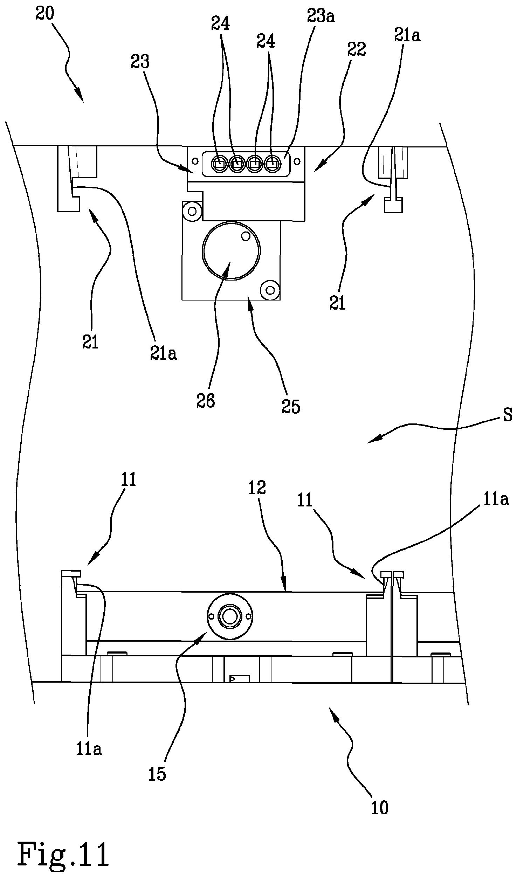

- Figure 8 is a perspective view of the mould in Figure 7 from a different angle;
- Figures from 9 to 11 show a few details of the machine in Figure 1, with some parts removed to highlight others;
- Figure 12 shows a sectional view of a detail of the machine in Figure 1, with some parts removed to highlight others.

With reference to the figures, a thermo-sealing machine for food packages, which is the object of the present invention, is indicated as a whole by the numeral 1 and will be hereinafter referred to by the term "machine 1".

This machine 1 is suitable for processing food-grade packages defining a containment volume for a food product and having an upper opening for accessing this containment volume, for example pre-formed plastic trays. These packages will henceforth be referred to as packages "C".

The machine 1 has a base 2 suitable for supporting the same on a flat floor and comprising a conveyor assembly 5 configured to feed a plurality of packages "C" along a feed direction from an input station "I" to a sealing station "S".

The input station "I" can be configured to receive products positioned, for example manually, by an operator or to be connected in-line to different machines belonging to the same production chain so as to receive packages "C" directly filled with a product by these machines in an automatic manner.

Preferably, the conveyor assembly 5 comprises sliding loaders on a sliding surface 6 for feeding the packages "C" on the sliding surface 6 along the same.

Above and below the sealing station "S", the machine 1 comprises at least one lower mould 100 and an upper mould 200 mutually movable in the vertical direction between a receiving position and a sealing position.

The lower 100 and upper moulds 200, when arranged in the receiving position, are configured to receive one or more package(s) "C" from the conveyor assembly 5, and in the sealing position to abut against each other to seal a wrap or protective film on respective upper openings of these packages "C" so as to seal them.

The lower 100 and upper moulds 200, when abutted against each other, are further configured to define a fluid-tight sealed volume on which pneumatic means (not shown) act to extract the air therefrom and, optionally, to re-inject a specific gas mixture.

In the embodiment shown herein, the machine 1 comprises two lower moulds 100 and two upper moulds 200 arranged in line along the feed direction of the plurality of packages "C", each one configured to receive two packages "C" side by side. Preferably, in order to position the protective film between the two lower and upper moulds 100 and 200, the machine 1 comprises unwinding means configured to unwind a continuous strip of film from a first roll and rewind it onto a second roll, doing so between the two rolls in the sealing station "S" between the lower mould 100 and the upper mould 200. In this way, when the lower and upper moulds 100 and 200 abut against each other in the sealing position, a portion of film remains interposed therebetween above the upper opening of the packages "C" being processed.

The machine 1 comprises a lower support 10 defining a housing seat for the lower mould 100 arranged vertically below the sealing station "S", and an upper support 20 defining a housing seat for the upper mould 200 arranged vertically above the sealing station "S".

The lower support 10 and the upper support 20 are configured to support and hold in position the lower and upper moulds 100 and 200 in the respective housing seats and to move them reciprocally in the vertical direction from the receiving position to the sealing position.

In the preferred embodiment, the upper support 20 is fixed and integral with the base 2 of the machine 1 so as to hold the upper mould 200 in a fixed position while the lower support 10 is vertically movable to move the lower mould 100 with respect to the base 2 of the machine 1 and to the upper mould 200.

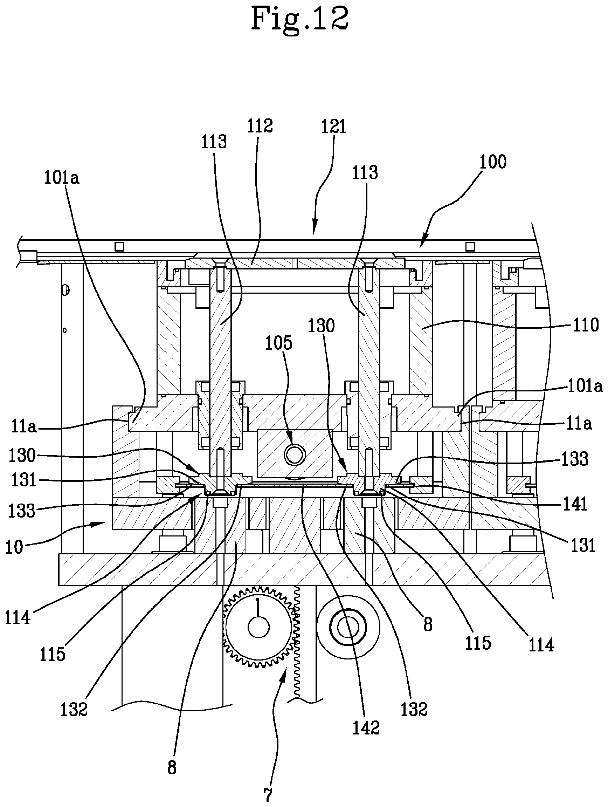

To this end, the machine 1 comprises operating means 7 (Fig.12) acting on the lower support 10 to move it vertically between the receiving position and the sealing position.

To allow reversible positioning of the lower and upper moulds 100 and 200, both the lower support 10 and the upper support 20 have respective support portions 11 and 21, preferably comprising sliding guides 11a and 21a.

Similarly, the lower 100 and upper moulds 200 have connecting portions 101 and 201 configured to engage the respective support portions 11 and 21, so as to cause the lower 100 and upper moulds 200 to be connected to the machine 1 reversibly, which allows disassembly and replacement thereof.

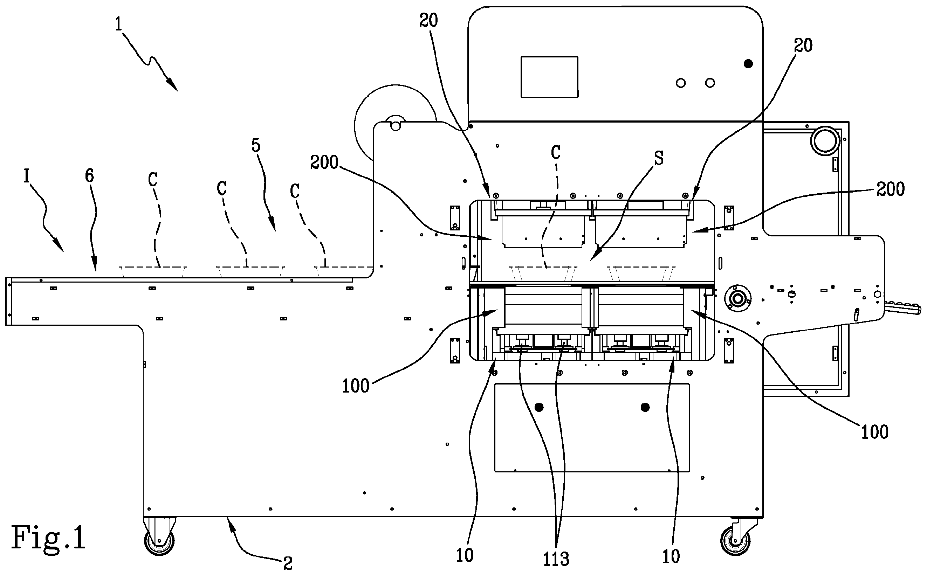

Preferably, the connecting portions 101 and 201 comprise sliding guides 101a and 201a configured to engage the sliding guides 11a and 21a of the lower and upper supports 10 and 20, so as to allow a sliding and constrained movement of the respective lower and upper moulds 100 and 200 between an operating configuration, shown in Figure 1, and a disassembled configuration, which allows the replacement thereof.

The sliding guides 11a, 21a, 101a and 201a comprise, for example, linear protrusions and reciprocal grooves, as in the solution shown herein, or rails and wheels arranged in line and configured to engage these rails.

In the preferred embodiment, the sliding guides 11a and 21a are oriented along a horizontal direction perpendicular to the feed direction imparted by the conveyor assembly 5 to the packages "C", so as to allow the lower and upper moulds 100 and 200 to move in a direction perpendicular thereto.

More specifically, in the operating configuration, the lower 100 and upper moulds 200 are arranged in the respective housing seats vertically below or above the sealing station "S" and are integral with the respective lower and upper supports 10 and 20.

In order to disassemble the lower and upper moulds 100 and 200, they need to be removed from the respective housing seat by slidingly moving them along the respective sliding guides 11a and 21a until they are completely removed in the disassembled configuration.

With reference to the upper mould 200, it has an electrical resistance 207 arranged so as to heat a lower surface of the upper mould 200 along a path that follows the shape of the edge of a package "C".

In order to power the resistance 207, the upper mould 200 has an electrical connector 202 arranged on a rear surface thereof. Similarly, the upper support 20 has a respective electrical connector 22 arranged on a rear surface thereof and configured to engage the electrical connector 202 of the upper mould 200 during its sliding along the sliding guide 21a towards its housing seat upon transition from the disassembled configuration to the operating configuration.

Preferably, the electrical connectors 22 and 202 comprise a plug 203 and a respective socket 23 configured to engage with each other during the final phase of the constrained movement of the upper mould 200 towards the respective housing seat. Both the plug 203 and the socket 23 are made of an electrically insulating, preferably polymeric material.

In the preferred embodiment, the upper mould 200 comprises the plug 203 rigidly and integrally connected thereto so as to define the electrical connector 202 and extending away from its rear surface parallel to the direction of the respective sliding guides 201a.

Similarly, the upper support 20, particularly the electrical connector 22 comprises the socket 23, which in turn defines a hollow seat 23a extending parallel to the sliding guides 21a.

The plug 203 is counter-shaped to the hollow seat 23a and arranged so as to engage it when the upper mould 200 is in the operating configuration in the respective housing seat.

More specifically, the plug 203 has a plurality of slots 204, also oriented parallel to the sliding guides 201a, and comprises a plurality of electrical contacts arranged therein.

These electrical contacts are electrically connected to the electrical resistance 207, to power it, and optionally to a plurality of temperature and/or pressure sensors mounted on the mould 200, to power them and transmit signal currents from them. The socket 23 comprises a plurality of conductive terminals 24 arranged inside the hollow seat 23a and protruding from a bottom surface in a direction parallel to the sliding guide 21a towards the housing seat of the upper mould 200.

The terminals 24 are configured to engage respective slots 204 when the upper mould 200 is arranged in the operating configuration in the respective housing seat, and to come into contact with the electrical contacts arranged inside the slots 204.

In particular, the terminals 24 are configured to engage the respective slots 204 during the final phase of the constrained movement of the upper mould 200 towards its housing seat upon transition from the disassembled configuration to the operating configuration, and the terminals 24 are configured to come into contact with the electrical contacts inside the slots 204 when the upper mould 200 abuts against an end stop of the upper support 20, not shown.

The upper mould 200 has a concave lower surface suitable for defining an upper volume, which is part of the sealed volume defined by the lower and upper moulds 100 and 200 when they are in abutment against one another.

The concave lower surface is configured to be arranged above the film strip interposed between the lower and upper moulds 100 and 200 in mutual abutment. In order to control the pressure in the upper volume, which is adjacent to the film in the sealing position, the upper mould 200 has a pneumatic connector 205 and sealed internal ducts for connecting the upper volume to the pneumatic connector 205.

Preferably, the pneumatic connector 205 is defined by a rigid annular protrusion 206 extending away from the rear surface of the mould 200 in a direction parallel to the sliding guide 201a.

Similarly, the upper support 20 comprises a pneumatic connector 25 configured to engage the pneumatic connector 205 of the upper mould 200 to establish a sealed fluid connection between the upper volume and the pneumatic means of the machine 1. This allows the pressure acting on top of the film to be adjusted when the lower and upper moulds 100 and 200 are in the sealing position.

Preferably, the pneumatic connector 25 comprises an intake hole 26 counter-shaped to the annular protrusion 206 and extending in a direction parallel to the sliding guide 21a.

Advantageously, the annular protrusion 206 is configured and positioned so as to engage the intake hole 26 during a constrained movement of the upper mould 200 along the respective sliding guides 21a towards its housing seat upon transition between the disassembled configuration and the operating configuration, in particular during a final phase of this movement.

With reference to the lower mould 100, it comprises a box-like frame 110, in turn defining a lower chamber open at the top and having the aforesaid connecting portions 101, in particular the sliding guides 101a.

The lower chamber is complementary to the upper volume of the upper mould 200 so as to define the aforementioned sealed volume when the lower mould 100 abuts against the upper mould 200.

To allow removal and re-introduction of gas from/into the lower chamber, which in use shares the same atmosphere with the packages "C" being processed, the lower mould 100 has a pneumatic connector 105 and sealed internal ducts for connecting the lower chamber to the pneumatic connector 105.

In the preferred embodiment, the pneumatic connector 105 of the lower mould 100 is a female connector, i.e. a hole appearing from a rear surface of the lower mould 100 and extending parallel to its sliding guides 101a.

Similarly, the lower support 10 comprises a pneumatic connector 15 configured to engage the pneumatic connector 105 of the lower mould 100 to establish a sealed fluid connection between the lower chamber and the pneumatic means of the machine 1.

In order to support the pneumatic connector 15, the lower support 10 comprises a rear wall 12 preferably suitable to determine an end stop for the sliding movement of the lower mould 100 in the operating configuration.

In the preferred embodiment, the pneumatic connector 15 of the lower support 10 is a male connector, i.e. a rigid tubular body counter-shaped to the female connector 105 and fixed to a first side of the rear wall 12 facing the housing seat of the lower mould 100.

Advantageously, the male pneumatic connector 15 extends towards the housing seat of the lower mould 100 in a direction parallel to the sliding guides 11a, so as to engage the female pneumatic connector 105 during the movement of the lower mould 100 along the respective sliding guides 11a towards its housing seat upon transition from the disassembled configuration to the operating configuration, in particular during a final phase of this transition.

In the preferred solution wherein the lower mould 100 is vertically movable between the receiving position and the sealing position, the pneumatic connector 15 of the lower support 10 is hermetically connected to the pneumatic means of the machine 1 by means of a flexible pipe 17 connected to the pneumatic connector 15 at a second side of the rear wall 12.

To allow the packages "C" to move from the sliding surface 6 of the machine 1 to the lower mould 100, the frame 110 defines a flat upper surface 111 arranged horizontally and aligned with the feed direction of the packages "C" on the sliding surface 6 when the lower mould 100 is housed in the respective housing seat in the receiving position.

The upper surface 111 has one or more openings 121 for accessing the lower chamber, preferably one for each package "C", which the lower mould 100 is configured to seal simultaneously, in particular two in number in the illustrated solution.

The openings 121 define respective processing seats for the packages "C" so that the upper edges thereof can be pressed against the electrical resistance 207 of the upper mould 200 in the sealing position, and so that the lower chamber is in fluid communication with the inside of the packages "C".

Moreover, the lower mould 100 comprises one or more small plates 112 parallel to the upper surface 111 and movable with respect to the frame 110 between a raised position, in which the same engage respective openings 121 so as to be arranged flush with the upper surface 111, and a lowered position, in which the small plates 112 are arranged below the upper surface 111.

In the raised position, the packages "C" can be dragged by moving means 5 sliding between the upper surface 111 and the small plates 112, without engagement of the openings 121 by the packages "C".

On the other hand, in the lowered position, the packages "C" engage the openings 121 so as to be at least partially housed in the lower chamber.

In order to support and move the small plates 112, the lower mould 100 comprises a plurality of vertical pistons 113, slidably connected to the frame 110 and vertically movable between the aforementioned raised and lowered positions.

Each piston 113 is connected at the top to a respective small plate 112 and has a lower support portion 114 defining a bottom end 115 of the piston 113.

To make the pistons 113 move, the machine 1 has a plurality of abutment elements 8 (Fig. 12) arranged vertically below the sealing station "S" and the lower support 10.

The bottom ends 115 of each piston 113 are configured to abut against respective abutment elements 8 when the lower mould 100 is housed in its housing seat in the operating configuration.

Preferably, the movement of the pistons 113 between the raised position and the lowered position is implemented by a movement of the lower support 10 by means of the operating means 7.

Following this implementation, the support portions 11 are movable in the vertical direction, integrally with the frame 110 of the lower mould 100, from the receiving position to the sealing position.

Vice versa, the abutment elements 8 remain integral with the base 2 of the machine 1, and the reciprocal movement in the vertical direction between the support portions 11 and the abutment elements 8 therefore involves a movement of the pistons 113 and the small plates 112 with respect to the frame 110.

This movement, if considered with reference to the machine 1, is therefore a movement of the frame 110 alone, whereas the pistons 113 and the small plates 112 remain integral with the base 2.

In this embodiment, the positioning of the small plates 112 in the raised position therefore occurs concurrently with the positioning of the lower mould 100 in the receiving position, and the positioning of the small plates 112 in the lowered position occurs concurrently with the positioning of the lower mould 100 in the sealing position.

Preferably, the lower mould 100 comprises a plurality of elastic elements, not shown, acting between the frame 110 and the pistons 113 to press the latter downwards, so as to implement or promote the movement of the small plates 112 from the raised position to the lowered position during the vertical movement of the lower mould 100 from the receiving position to the sealing position.

In order to make the lower mould 100 move from the operating configuration to the disassembled configuration, the pistons 113 need to be blocked so as to prevent them from falling downwards after the displacement of the respective ends 115 from the corresponding abutment elements 8.

Advantageously, for this purpose, each piston 113 comprises a stop disc 130 arranged along its direction of extension between the small plate 112 and the bottom end 115 and has a respective engagement portion 131 defined by a lower shoulder 132 of the stop disc 130.

Preferably, each stop disc 130 also has a lower flared surface 133 having a truncated-cone shape extending around the direction of extension of the respective piston 113.

The lower mould 100 comprises a locking element 140 connected to the frame 110 and movable relative thereto between an engagement position, in which it engages the engagement portions 131 of the pistons 113 to prevent them from moving downwards, and a disengagement position, in which the locking element 140 releases the engagement portions 131 of the pistons 113, to allow them to move vertically between the raised position and the lowered position.

Preferably, the frame 110 defines grooves 141, which in the preferred embodiment are oriented parallel to the sliding guide 101a, and the locking element 140 comprises a plate 142, which slidably engages the grooves 141 so as to be movable and define the engagement and disengagement positions.

In the preferred embodiment, this plate 142 is oriented parallel to the upper surface 11 and arranged below the small plates 112, more particularly at a bottom end of the frame 110.

Furthermore, the plate 112 is preferably rectangular and has a shape that substantially follows the horizontal plan shape of the frame 110.

The plate 142 has respective engagement holes 143, each one passed through by a respective piston 113 and shaped so as to allow the plate 142 to move along the grooves 141 between the engagement and the disengagement position. Preferably, each engagement hole 143 extends along the sliding direction of the plate 142 along the grooves 141, so as to have a widening 144 and a narrowing 145.

Each stop disc 130 has a diameter greater than the width of the narrowing 145 perpendicularly to the sliding direction of the plate 142.

The widening 144 and the narrowing 145 are arranged and configured so that each piston 113 engages the widening 144 when the plate 142 is in the disengagement position and that the same piston 113 engages the corresponding narrowing 145 when the plate 142 is in the engagement position.

The stop discs 130 and the respective engagement holes 143 are sized and mutually positioned so that each stop disc 130 can pass through the respective widening 144 during the movement of the respective piston 113 between the raised position and the lowered position when the plate 142 is in the disengagement position.

In addition, the plate 142 and the stop discs 130 are mutually arranged so that when the plate 142 is the engagement position the shoulder 132 abuts against a wall of the plate 142 that is adjacent to the narrowing 145 to block the movement of the pistons 113 downwards when the plate 142 is in the engagement position. Moreover, the support portion 114 has a diameter smaller than the width of the respective narrowing 145 perpendicularly to the sliding direction of the plate 142, so that the same support portion 114 engages the narrowing 145 during the movement of the plate 142 from the disengagement position to the engagement position and does not prevent the movement of the plate 142 itself.

Preferably, the lower flared surface 133 exhibited by each stop disc 130 is configured to engage an edge of the corresponding engagement hole 143 during the movement of the plate 142 from the disengagement position to the engagement position, so as to define a lead-in for the sliding thereof against the engagement portions 131.

The lower flared surface 133 and the plate 142 are configured so that the oblique sliding of the edge of the engagement hole 143 against the lower flared surface 133 causes the respective piston 113 to rise and then transfers the pressure acting on the pistons 113 from the abutment elements 8 to the plate 142.

A further object of the present invention is a kit comprising a thermo-sealing machine 1 for food packages of the type described above and a plurality of lower and upper moulds 100 and 200, as described above, configured for thermally sealing respective mutually different food packages "C", wherein each pair of lower and upper moulds 100 and 200 is suitable to thermally seal a given type of package "C".

The present invention achieves the intended object, overcoming the drawbacks of the prior art. Advantageously, the above-described configuration and arrangement of the electrical and pneumatic connectors arranged on the moulds and on the respective supports allows maximum flexibility and ease of change of the package type with automatic electrical and/or pneumatic connections both for the upper and lower mould.

## Claims

1. A thermo-sealing machine (1) for food packages, comprising:
- a conveyor assembly (5) configured to feed a plurality of food packages (C) from an input station (I) to a sealing station (S);
- at least one upper mould (200) having at least one electrical resistance (207) suitable to thermally seal a package (C);
- at least one lower mould (100) suitable to receive a package (C) and configured to abut against said upper mould (200) so as to press an edge of said package (C) against a surface of the upper mould (200) heated by said electrical resistance (207);
- at least one upper support (20) defining a housing seat for the upper mould (200) arranged vertically above said sealing station (S), the upper mould (200) and said related upper support (20) having respective sliding guides (201a, 21a) mutually engageable to allow the upper mould (200) to move slidingly between a disassembled configuration, which allows the upper mould (200) to be replaced, and an operating configuration, wherein the upper mould (200) is arranged in its housing seat and is integral with the upper support (20);
- at least one lower support (10) defining a housing seat for said lower mould (100) arranged vertically below the sealing station (S);
the lower and upper supports (10, 20) being mutually movable in the vertical direction for moving the lower and upper moulds (100, 200) between a receiving position, which allows said packages (C) to access the sealing station (S), and a sealing position, wherein the lower and upper moulds (100, 200) abut against each other to thermally seal the packages (C),
the upper mould (200) and the upper support (20) having respective electrical connectors (22, 202) oriented parallel to the corresponding sliding guide (201a, 21a) and configured for supplying the electrical resistance (207),
said electrical connector (202) of the upper mould (200) being configured and arranged so as to engage said respective electrical connector (22) of the upper support (20) during a constrained movement of the upper mould (200) along the corresponding sliding guides (21a) towards its housing seat upon transition between the disassembled configuration and the operating configuration,
the lower and upper moulds (100, 200) being configured to define a sealed volume when abutted against each other and said machine (1) comprising pneumatic means adapted to withdraw and/or inject gas from/into said sealed volume,
the upper mould (200) and the upper support (20) having respective pneumatic connectors (205, 25) oriented parallel to the corresponding sliding guide (201a, 21a) and configured to establish a fluid-tight connection between the sealed volume and said pneumatic means, the pneumatic connector (205) of the upper mould (200) being arranged and configured to engage the pneumatic connector (25) of the upper support (20) during said constrained movement of the upper mould (100) towards the housing seat, wherein
the lower mould (100) and the lower support (10) have respective sliding guides (101a, 11a) mutually engageable to allow the lower mould (100) to move slidingly between a disassembled configuration, which allows the lower mould (100) to be replaced, and an operating configuration, wherein the lower mould (100) is arranged in its housing seat and is integral with the lower support (10), the lower mould (100) and the lower support (10) comprising respective pneumatic connectors (105, 15) oriented parallel to the respective sliding guide (101a, 11a) and configured to establish a fluid-tight connection between the sealed volume and the pneumatic means, said pneumatic connector (105) of the lower mould (100) being configured and arranged so as to engage said pneumatic connector (15) of the lower support (10) during a constrained movement of the lower mould (100) along the corresponding sliding guides (11a) towards its housing seat upon transition between the disassembled configuration and the operating configuration.

2. The machine (1) according to claim 1, wherein said electrical connectors (22, 202) comprise a plug (203) rigidly fixed to said upper mould (200) or to said upper support (20) and a socket (23) rigidly fixed to said upper support (20) or to said upper mould (200), respectively, said socket (23) having a hollow seat (23a) extending parallel to the sliding guide (201a, 21a) of the corresponding upper mould or support (200, 20), and said plug (203) being counter-shaped to said hollow seat (23a) and extending parallel to the sliding guide (201a, 21a) of the corresponding upper mould or support (200, 20) so as to engage said socket (23) when said upper mould (200) is in the operating configuration in order to electrically connect said electrical resistance (207) to a source for power supplying said machine (1).

3. The machine (1) according to claim 2, wherein said plug (203) has a plurality of slots (204) and comprises a plurality of electrical contacts arranged inside said slots (204), said socket (23) comprising a plurality of conductive terminals (24) arranged inside the hollow seat (23a), each terminal (24) being configured to engage a respective one of said slots (204) to come into contact with a corresponding electrical contact during a final step of said movement of the upper mould (200) towards the housing seat.

4. The machine (1) according to any of the preceding claims, wherein said lower support (10) is vertically movable, with respect to a base (2) of said machine, (1) away from and towards said upper support (20), said machine (1) comprising a flexible pipe (17) connecting the pneumatic connector (15) of the lower support (10) to the pneumatic means.

5. The machine (1) according to claim 4, wherein said lower support (10) comprises a rear wall (12) adapted to determine an end stop for the sliding movement of the lower mould (100) in the operating configuration, the pneumatic connector (15) of the lower support (10) being rigidly fixed to a first side of said rear wall (12), and the flexible pipe (17) being connected to said pneumatic connector (15) at a second side of the rear wall (12).

6. The machine (1) according to any of the preceding claims, wherein said pneumatic connectors (105, 15) of the lower mould (100) comprise a male connector (15) arranged on the lower support (10) and a corresponding female connector (105) arranged on the lower mould (100).

7. The machine (1) according to one or more of the preceding claims, wherein the sliding guides (11a, 21a) of the lower support (10) and/or the upper support (20) are oriented along a horizontal direction perpendicular to a feed direction imparted by the conveyor assembly (5) to said packages (C).

8. A kit comprising a thermo-sealing machine (1) for food packages according to one or more of claims 1 to 7 and a plurality of lower and upper moulds (100, 200) configured for thermally sealing the respective mutually different food packages (C), wherein each pair of lower and upper moulds (100, 200) is suitable to thermally seal a given type of package (C).

## Patentansprüche

1. Eine Thermoversiegelungsmaschine (1) für Lebensmittelverpackungen, umfassend:
- eine Förderbandbaugruppe (5), die dazu ausgelegt ist, eine Mehrzahl von Lebensmittelverpackungen (C) von einer Eingangsstation (I) zu einer Versiegelungsstation (S) zu befördern;
- wenigstens ein oberes Formwerkzeug (200) mit wenigstens einem elektrischen Widerstand (207) zur thermischen Versiegelung einer Verpackung (C);
- wenigstens ein unteres Formwerkzeug (100), das zur Aufnahme einer Verpackung (C) geeignet ist und dazu ausgelegt ist, an dem besagten oberen Formwerkzeug (200) eng anzuliegen, um eine Kante der besagten Verpackung (C) gegen eine Oberfläche des oberen, von dem besagten elektrischen Widerstand (207) aufgeheizten Formwerkzeugs (200) zu drücken;
- wenigstens eine obere Stütze (20), die einen Auflagesitz für das obere, vertikal oberhalb der besagten Versiegelungsstation (S) angeordnete Formwerkzeug (200) bildet, wobei das obere Formwerkzeug (200) sowie die besagte, zugeordnete obere Stütze (20) einander entsprechende, ineinander greifende Gleitführungen (201a, 21a) aufweisen, um es dem oberen Formwerkzeug (200) zu ermöglichen, sich gleitend zu bewegen zwischen einer auseinander gefahrenen Konfiguration, die einen Austausch des oberen Formwerkzeugs (200) zulässt, und einer Arbeitskonfiguration, in welcher das obere Formwerkzeug (200) in seinem Auflagesitz angeordnet ist und mit der oberen Stütze (20) integriert ist;
- wenigstens eine untere Stütze (10), die einen Auflagesitz für das besagte, untere, vertikal unterhalb der besagten Versiegelungsstation (S) angeordnete Formwerkzeug (100) bildet,
- wobei die unteren und oberen Stützen (10, 20) von beiden Seiten in der vertikalen Richtung bewegbar sind, um das untere und obere Formwerkzeug (100, 200) zwischen einer Aufnahmeposition, die es den besagten Verpackungen ermöglicht, in die Versiegelungsstation (S) zu gelangen, und einer Versiegelungsposition, in welcher das untere und das obere Formwerkzeug (100, 200) aneinander anliegen, um die Verpackungen (C) thermisch zu versiegeln, zu bewegen,
- wobei das obere Formwerkzeug (200) und die obere Stütze (20) entsprechende elektrische Anschlüsse (22, 202) aufweisen, die parallel zu der entsprechenden Gleitführung (201a, 21a) ausgerichtet und zur Versorgung des elektrischen Widerstands (207) ausgelegt sind,
- wobei der elektrische Anschluss (202) des oberen Formwerkzeugs (200) dazu ausgelegt und derart angeordnet ist, um mit dem betreffenden elektrischen Anschluss (22) der oberen Stütze (20) während einer eingeschränkten Bewegung des oberen Formwerkzeugs (200) entlang der entsprechenden Gleitführungen (21a) in Richtung zu seinem Auflagesitz in Eingriff zu treten bei dem Übergang zwischen der auseinander gefahrenen Konfiguration und der Arbeitskonfiguration,
- wobei das untere und obere Formwerkzeug (100, 200) dazu ausgelegt ist, um ein geschlossenes Volumen zu umgrenzen, wenn sie aneinander liegen, wobei die Vorrichtung (1) ein pneumatisches Mittel aufweist, das dazu geeignet ist, Gas aus dem geschlossenen Volumen abzuziehen und/oder in das geschlossene Volumen einzuspeisen,
- wobei das obere Formwerkzeug (200) und die obere Stütze (20) entsprechende pneumatische Anschlüsse (205, 25) aufweisen, die parallel zu der zugeordneten Gleitführung (201a, 21a) ausgerichtet und dazu ausgelegt sind, eine flüssigkeitsdichte Verbindung zwischen dem geschlossenen Volumen und dem besagten pneumatischen Mittel einzurichten, wobei der pneumatische Anschluss (205) des oberen Formwerkzeugs (200) derart angeordnet und dazu ausgelegt ist, während der besagten eingeschränkten Bewegung des oberen Formwerkzeugs (100) in Richtung zu seinem Auflagesitz mit dem pneumatischen Anschluss (25) der oberen Stütze (20) in Eingriff zu treten,
- wobei das untere Formwerkzeug (100) und die untere Stütze (10) entsprechende Gleitführungen (101a, 11a) aufweisen, die miteinander in Eingriff treten können, damit sich das untere Formwerkzeug (100) gleitend bewegen kann zwischen einer auseinander gefahrenen Konfiguration, die einen Austausch des unteren Formwerkzeugs (100) zulässt, und einer Arbeitskonfiguration, in welcher das untere Formwerkzeug (100) in seinem Auflagesitz angeordnet und mit der unteren Stütze (10) integriert ist, wobei das untere Formwerkzeug (100) und die untere Stütze (10) entsprechende pneumatische Anschlüsse (105, 15) aufweisen, die parallel zur betreffenden Gleitführung (101a, 11a) ausgerichtet und dazu ausgelegt sind, eine flüssigkeitsdichte Verbindung zwischen dem geschlossenen Volumen und dem besagten pneumatischen Mittel einzurichten, wobei der besagte pneumatische Anschluss (205) des unteren Formwerkzeugs (100) dazu ausgelegt ist und derart angeordnet ist, um während der besagten eingeschränkten Bewegung des unteren Formwerkzeugs (100) entlang der entsprechenden Gleitführungen (11a) in Richtung zu seinem Auflagesitz bei dem Übergang zwischen der auseinander gefahrenen Konfiguration und der Arbeitskonfiguration mit dem pneumatischen Anschluss (15) der unteren Stütze (10) in Eingriff zu treten.

2. Die Maschine (1) gemäß Anspruch 1, wobei die besagten elektrischen Anschlüsse (22, 202) jeweils einen Stecker (203) umfassen, der mit dem besagten oberen Formwerkzeug (200) oder mit der besagten oberen Stütze (20) starr verbunden ist, sowie eine Buchse (23), die mit der besagten oberen Stütze (20) oder mit dem besagten oberen Formwerkzeug (200) starr verbunden ist, wobei die besagte Buchse (23) eine hohle Aufnahme (23a) aufweist, die sich parallel zu der Gleitführung (201a, 21a) des betreffenden oberen Formwerkzeugs oder der oberen Stütze (200, 20) erstreckt und wobei der besagte Stecker (203) als Gegenstück zu der hohlen Aufnahme (23a) geformt ist und sich parallel zu der Gleitführung (201a, 21a) des entsprechenden oberen Formwerkzeugs oder der oberen Stütze (200, 20) erstreckt, um so mit dem betreffenden Stecker (23) in Eingriff zu treten, wenn das besagte obere Formwerkzeug (200) in der Arbeitskonfiguration ist, um den elektrischen Widerstand (207) mit einer Quelle zur Versorgung der besagten Maschine (1) mit Energie elektrisch zu verbinden.

3. Die Maschine (1) gemäß Anspruch 2, wobei der besagte Stecker (203) eine Mehrzahl von Vertiefungen (204) aufweist sowie eine Mehrzahl von elektrischen Kontakten umfasst, die im Inneren der Vertiefungen (204) angeordnet sind, wobei der besagte Stecker (23) eine Mehrzahl von leitenden Anschlüssen (24) umfasst, die im Inneren der hohlen Aufnahme (23a) angeordnet sind, wobei jeder Anschluss (24) dazu ausgelegt ist, mit einer zugeordneten Vertiefung (204) in Eingriff zu treten, um während einem letzten Schritt der besagten Bewegung des oberen Formwerkzeugs (200) in Richtung zu dem Auflagesitz einen zugeordneten elektrischen Kontakt zu kontaktieren.

4. Die Maschine (1) gemäß einem der vorhergehen Ansprüche, wobei die besagte untere Stütze (10) gegenüber einer Basis (2) der besagten Maschine in vertikaler Richtung bewegbar ist weg, von und hin zu der besagten oberen Stütze (20), wobei die besagte Maschine (1) ein biegsames Rohr (17) umfasst, das den pneumatischen Anschluss (15) der unteren Stütze (10) mit dem pneumatischen Mittel verbindet.

5. Die Maschine (1) gemäß Anspruch 4, wobei die besagte untere Stütze (10) eine Rückwand (12) umfasst, die geeignet ist, einen Endanschlag der gleitenden Bewegung des unteren Formwerkzeugs (100) in der Arbeitskonfiguration festzulegen, wobei der pneumatische Anschluss (15) der unteren Stütze mit einer ersten Seite der besagten Rückwand (12) starr verbunden ist, und wobei das biegsame Rohr (17) an dem besagten pneumatischen Anschluss (15) an einer zweiten Seite der Rückwand (12) angeschlossen ist.

6. Die Maschine (1) gemäß einem der vorhergehenden Ansprüche, wobei die besagten pneumatischen Anschlüsse (105, 15) des unteren Formwerkzeugs (100) einen Stecker (15) umfassen, der an der unteren Stütze (10) angeordnet ist, sowie eine zugeordnete Buchse (105), die an dem unteren Formwerkzeug (100) angeordnet ist

7. Die Maschine (1) gemäß einem oder mehreren vorhergehenden Ansprüche, wobei die Gleitführungen (11a, 21a) der unteren Stütze (10) und/oder der oberen Stütze (20) entlang einer horizontalen Richtung angeordnet sind, die rechtwinklig zu der Richtung eines Vorschubs ist, der den besagten Verpackungen von der Förderbandbaugruppe (5) mitgeteilt wird.

8. Ein Bausatz, umfassend eine Thermoversiegelungsmaschine (1) für Lebensmittelverpackungen nach einem oder mehreren der Ansprüche 1 bis 7, sowie eine Mehrzahl von unteren und oberen Formwerkzeugen (100, 200) zur thermischen Versiegelung der jeweiligen, untereinander verschiedenen Lebensmittelverpackungen (C), wobei jedes Paar von unteren und oberen Formwerkzeugen (100, 200) dazu geeignet ist, eine vorgegebene Art einer Verpackung (C) thermisch zu versiegeln.

## Revendications

1. Machine (1) de thermoscellage pour emballages alimentaires, comprenant :
- un ensemble transporteur (5) configuré pour amener une pluralité d'emballages (C) alimentaires, d'un poste d'entrée (I) à un poste de scellement (S) ;
- au moins un moule supérieur (200) ayant au moins une résistance électrique (207) appropriée pour sceller thermiquement un emballage (C) ;
- au moins un moule inférieur (100) approprié pour recevoir un emballage (C) et configuré pour venir en butée contre ledit moule supérieur (200) de façon à presser un bord dudit emballage (C) contre une surface du moule supérieur (200) chauffée par ladite résistance électrique (207) ;
- au moins un support supérieur (20) définissant un siège de logement pour le moule supérieur (200) agencé verticalement au-dessus dudit poste de scellement (S), le moule supérieur (200) et ledit support supérieur (20) associé ayant des guides coulissants (201a, 21a) respectifs pouvant se mettre en prise mutuellement pour permettre au moule supérieur (200) de se déplacer de manière coulissante entre une configuration démontée, qui permet au moule supérieur (200) d'être remplacé, et une configuration de fonctionnement, où le moule supérieur (200) est agencé dans son siège de logement et solidaire du support supérieur (20) ;
- au moins un support inférieur (10) définissant un siège de logement pour ledit moule inférieur (100) agencé verticalement en dessous du poste de scellement (S) ;
les supports inférieur et supérieur (10, 20) étant mutuellement mobiles dans la direction verticale pour déplacer les moules inférieur et supérieur (100, 200) entre une position de réception, qui permet auxdits emballages (C) d'accéder au poste de scellement (S), et une position de scellement, dans laquelle les moules inférieur et supérieur (100, 200) viennent en butée l'un contre l'autre pour sceller thermiquement les emballages (C),
le moule supérieur (200) et le support supérieur (20) ayant des connecteurs électriques (22, 202) respectifs orientés parallèlement au guide coulissant (201a, 21a) correspondant et configurés pour fournir la résistance électrique (207),
ledit connecteur électrique (202) du moule supérieur (200) étant configuré et agencé de façon à se mettre en prise avec ledit connecteur électrique (22) respectif du support supérieur (20) pendant un déplacement limité du moule supérieur (200) le long des guides coulissants (21a) correspondants vers son siège de logement lors de la transition entre la configuration démontée et la configuration de fonctionnement,
les moules inférieur et supérieur (100, 200) étant configurés pour définir un volume scellé lorsqu'ils sont en butée l'un contre l'autre, et ladite machine (1) comprenant des moyens pneumatiques adaptés pour retirer et/ou injecter un gaz du/dans ledit volume scellé,
le moule supérieur (200) et le support supérieur (20) ayant des connecteurs pneumatiques (205, 25) respectifs orientés parallèlement au guide coulissant (201a, 21a) correspondant et configurés pour établir une connexion étanche aux fluides entre le volume scellé et lesdits moyens pneumatiques, le connecteur pneumatique (205) du moule supérieur (200) étant agencé et configuré pour se mettre en prise avec le connecteur pneumatique (25) du support supérieur (20) pendant ledit déplacement limité du moule supérieur (100) vers le siège de logement,
dans laquelle
le moule inférieur (100) et le support inférieur (10) ont des guides coulissants (101a, 11a) respectifs, pouvant se mettre mutuellement en prise pour permettre au moule inférieur (100) de se déplacer de manière coulissante entre une configuration démontée, qui permet au moule inférieur (100) d'être remplacé, et une configuration de fonctionnement, où le moule inférieur (100) est agencé dans son siège de logement et solidaire du support inférieur (10), le moule inférieur (100) et le support inférieur (10) comprenant des connecteurs pneumatiques (105, 15) respectifs orientés parallèlement au guide coulissant (101a, 11a) respectif et configurés pour établir une connexion étanche aux fluides entre le volume scellé et les moyens pneumatiques, ledit connecteur pneumatique (105) du moule inférieur (100) étant configuré et agencé de façon à se mettre en prise avec ledit connecteur pneumatique (15) du support inférieur (10) pendant un déplacement limité du moule inférieur (100) le long des guides coulissants (11a) correspondants vers son siège de logement lors de la transition entre la configuration démontée et la configuration de fonctionnement.

2. Machine (1) selon la revendication 1, dans laquelle lesdits connecteurs électriques (22, 202) comprennent une fiche (203) fixée rigidement audit moule supérieur (200) ou audit support supérieur (20) et une prise (23) fixée rigidement audit support supérieur (20) ou audit moule supérieur (200), respectivement, ladite prise (23) ayant un siège creux (23a) s'étendant parallèlement au guide coulissant (201a, 21a) du moule ou support supérieur (200, 20) correspondant, et ladite fiche (203) étant de forme opposée audit siège creux (23a) et s'étendant parallèlement au guide coulissant (201a, 21a) du moule ou support supérieur (200, 20) correspondant, de façon à se mettre en prise avec ladite prise (23) lorsque ledit moule supérieur (200) est dans la configuration de fonctionnement afin de connecter électriquement ladite résistance électrique (207) à une source fournissant de la puissance à ladite machine (1).

3. Machine (1) selon la revendication 2, dans laquelle ladite fiche (203) a une pluralité de fentes (204) et comprend une pluralité de contacts électriques agencés à l'intérieur desdites fentes (204), ladite prise (23) comprenant une pluralité de bornes (24) conductrices agencées à l'intérieur du siège creux (23a), chaque borne (24) étant configurée pour se mettre en prise avec une fente respective desdites fentes (204) pour venir en contact avec un contact électrique correspondant pendant une étape finale dudit déplacement du moule supérieur (200) vers le siège de logement.

4. Machine (1) selon l'une quelconque des revendications précédentes, dans laquelle ledit support inférieur (10) est mobile verticalement par rapport à une base (2) de ladite machine (1) en s'éloignant et en se rapprochant dudit support supérieur (20), ladite machine (1) comprenant une conduite flexible (17) connectant le connecteur pneumatique (15) du support inférieur (10) aux moyens pneumatiques.

5. Machine (1) selon la revendication 4, dans laquelle ledit support inférieur (10) comprend une paroi arrière (12) adaptée pour déterminer une butée d'extrémité pour le déplacement coulissant du moule inférieur (100) dans la configuration de fonctionnement, le connecteur pneumatique (15) du support inférieur (10) étant fixé rigidement sur un premier côté de ladite paroi arrière (12), et la conduite flexible (17) étant connectée audit connecteur pneumatique (15) sur un second côté de la paroi arrière (12).

6. Machine (1) selon l'une quelconque des revendications précédentes, dans laquelle lesdits connecteurs pneumatiques (105, 15) du moule inférieur (100) comprennent un connecteur mâle(15) agencé sur le support inférieur (10) et un connecteur femelle (105) correspondant agencé sur le moule inférieur (100).

7. Machine (1) selon une ou plusieurs des revendications précédentes, dans laquelle les guides coulissants (11a, 21a) du support inférieur (10) et/ou du support supérieur (20) sont orientés le long d'une direction horizontale perpendiculaire à une direction d'amenée donnée par l'ensemble transporteur (5) auxdits emballages (C).

8. Kit comprenant une machine de thermoscellage (1) pour emballages alimentaires selon une ou plusieurs des revendications 1 à 7 et une pluralité de moules inférieurs et supérieurs (100, 200) configurés pour thermosceller les emballages alimentaires (C) respectifs mutuellement différents, dans lequel chaque paire de moules inférieurs et supérieurs (100, 200) est appropriée pour sceller thermiquement un type donné d'emballage (C).
